# EUROPEAN PATENT APPLICATION

(11) **EP 4 838 502 A1**
(43) Date of publication of application: **11.11.2026**
(21) Application number: 26172846.3
(22) Date of filing: 16.04.2026
(51) Int. Cl.: G08G 1/0962, B60K 35/22, B60K 35/29, B60R 1/00, B60R 1/28, B60W 50/14

(54) **VEHICLE DISPLAY CONTROL DEVICE AND PROGRAM**

(30) Priority: 24.04.2025 JP 2025072723
(71) Applicant: Toyota Jidosha Kabushiki Kaisha, Toyota-shi, Aichi-ken 471-8571 (JP)
(72) Inventor: KONISHI, Shogo, TOYOTA-SHI, AICHI-KEN, 471-8571 (JP); HATTORI, Tsutomu, TOYOTA-SHI, AICHI-KEN, 471-8571 (JP); TAKADA, Arata, TOYOTA-SHI, AICHI-KEN, 471-8571 (JP); NISHIDA, Takashi, TOYOTA-SHI, AICHI-KEN, 471-8571 (JP); FANG, Zhicheng, TOYOTA-SHI, AICHI-KEN, 471-8571 (JP); NISHIMURA, Shusei, KARIYA-SHI, AICHI-PREF, 448-8661 (JP)
(74) Representative: Cabinet Beau de Loménie

(57) **Abstract**

A vehicle display control device (20), comprises a recognition unit (211, 212) configured to recognize a traffic lane in the surroundings of a host vehicle, and a relative position of another vehicle with respect to the traffic lane; and a control unit (21B) configured to cause a display portion (44) to display a target image of the other vehicle at a display position and an inclination of the target image of the other vehicle with respect to the traffic lane, the display position and the inclination having been corrected based on a degree of reliability of recognition of the relative position of the other vehicle.

## Description

### Background

### Technical Field

The present disclosure relates to a vehicle display control device and a program.

### Related Art

Conventionally, in a display control device that includes a sensor system for automated driving of an automobile (see, for example, Japanese Patent Application Laid-Open (JP-A) No. 2022-149449), various objects in the surroundings of the vehicle are detected as targets, and further, the types of these targets are detected and displayed on a display portion as target images. Moreover, the traveling lane in which the vehicle travels and the positions of the traffic lane are detected, and images of the traveling lane and the traffic lane also are displayed on the display portion.

However, there are cases in which, due to changes in the sensing accuracies of sensor portions or differences in the peripheral situation of the vehicle or the like, the position at which the target image of a detected another vehicle is displayed differs from that in the actual scene (the real view), and a sense of incongruity is given to the driver.

### Summary

In view of the above-described topic, the present disclosure provides a vehicle display control device that optimizes display of another vehicle image and can reduce the sense of incongruity given to the driver.

A vehicle display control device relating to an aspect of the present disclosure has: a recognition unit configured to recognize a traffic lane in the surroundings of a host vehicle, and a relative position of another vehicle with respect to the traffic lane; and a control unit configured to cause a display portion to display a target image of the other vehicle at a display position and an inclination of the target image of the other vehicle with respect to the traffic lane, the display position and the inclination having been corrected based on a degree of reliability of recognition of the relative position of the other vehicle. In accordance with this aspect, the display position and the inclination of the target image of the other vehicle can be corrected and displayed in accordance with the degree of reliability of the recognition of the relative position of the other vehicle with respect to the traffic lane. Therefore, display of the other vehicle image can be optimized, and the sense of incongruity given to the driver can be reduced.

This vehicle display control device can be structured so as to further have: a setting unit configured to set the degree of reliability of recognition of the relative distance of the other vehicle; and a correction unit configured to correct the display position and the inclination based on the degree of reliability, wherein the setting unit sets the degree of reliability based on results of recognition by the recognition unit. In accordance with this structure, the degree of reliability can be set in accordance with the results of recognition including the method that is used in recognizing the position of the other vehicle, and therefore, the sense of incongruity given to the driver can be reduced. In this case, further, the setting unit can change the degree of reliability in accordance with whether the traffic lane, which is a target of recognition by the recognition unit, is in front of the other vehicle or is behind the other vehicle. In accordance with this structure, the degree of reliability is changed in accordance with the positional relationship between the traffic lane, which is the target of recognition, and the other vehicle, and therefore, the degree of reliability can be set more appropriately, and the sense of incongruity given to the driver can be reduced. Note that, in this case, the setting unit can lock the degree of reliability while the other vehicle is traveling the traffic lane that is a target of recognition by the recognition unit. Due thereto, while the other vehicle is traveling in a same traffic lane, the degree of reliability being changed frequently and the display position of the other vehicle image thereby being changed frequently can be suppressed, and the sense of incongruity given to the driver can be reduced more.

Further, in this vehicle display control device, the correction unit can be structured so as to correct the display position and the inclination of the target image of the other vehicle in accordance with curvature of the traffic lane and a relative distance of the other vehicle with respect to the host vehicle. In accordance with this aspect, the display position of the target image of the other vehicle can be controlled more appropriately, and the sense of incongruity given to the driver can be reduced.

### Brief Description of the Drawings

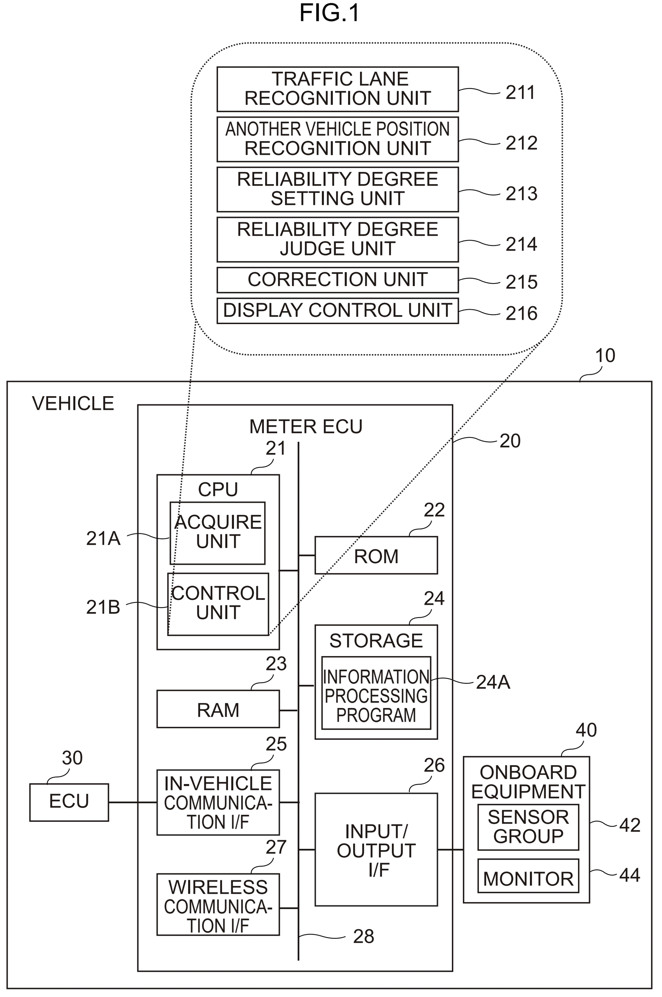

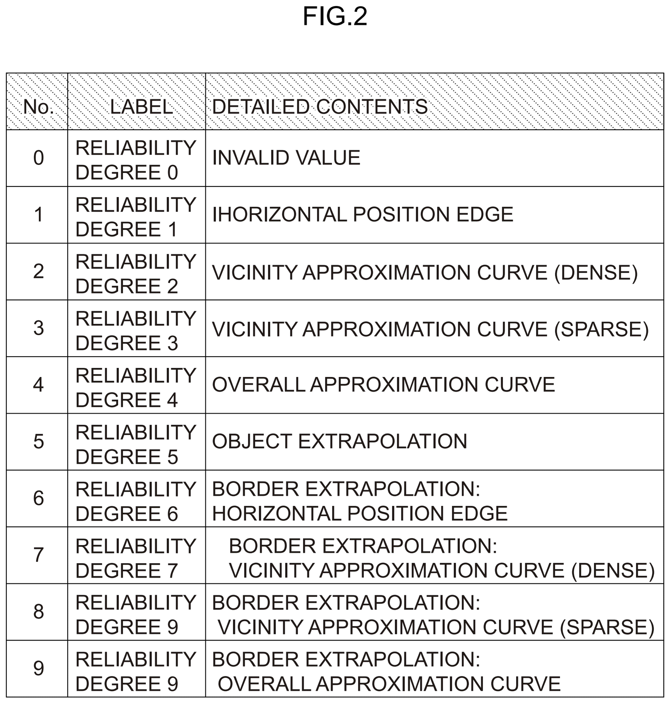

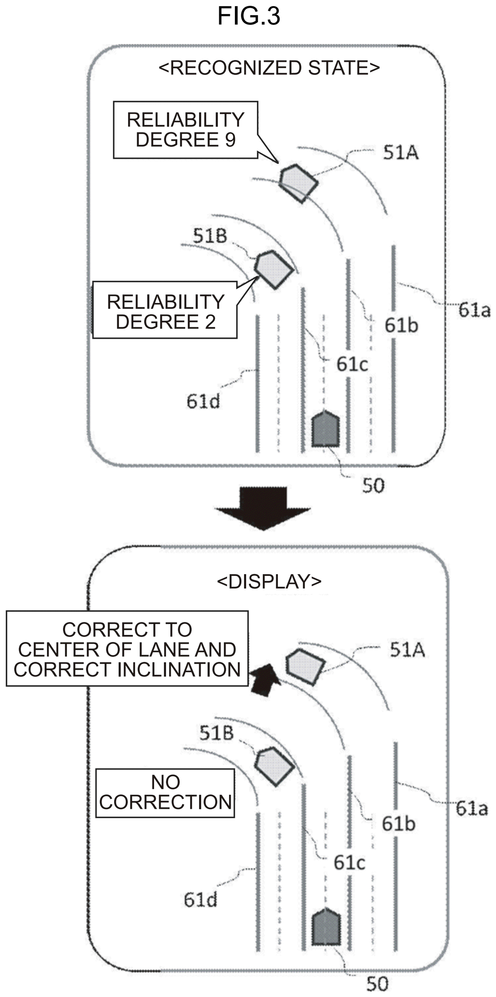

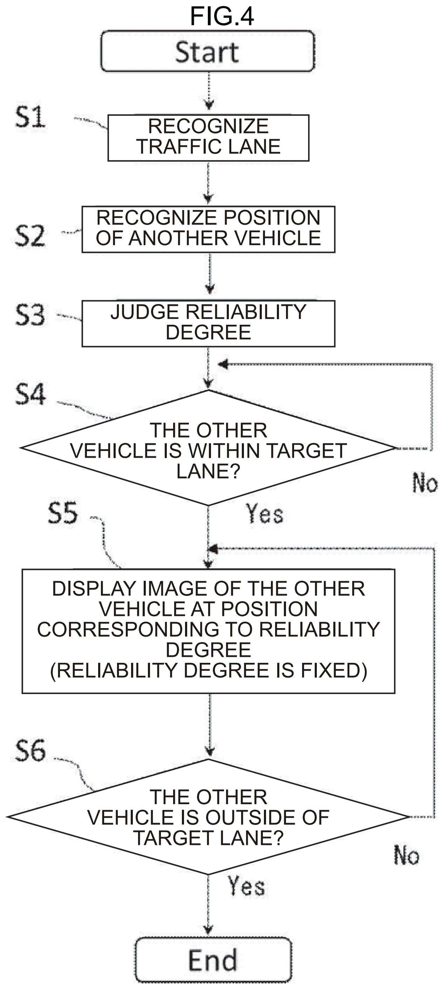

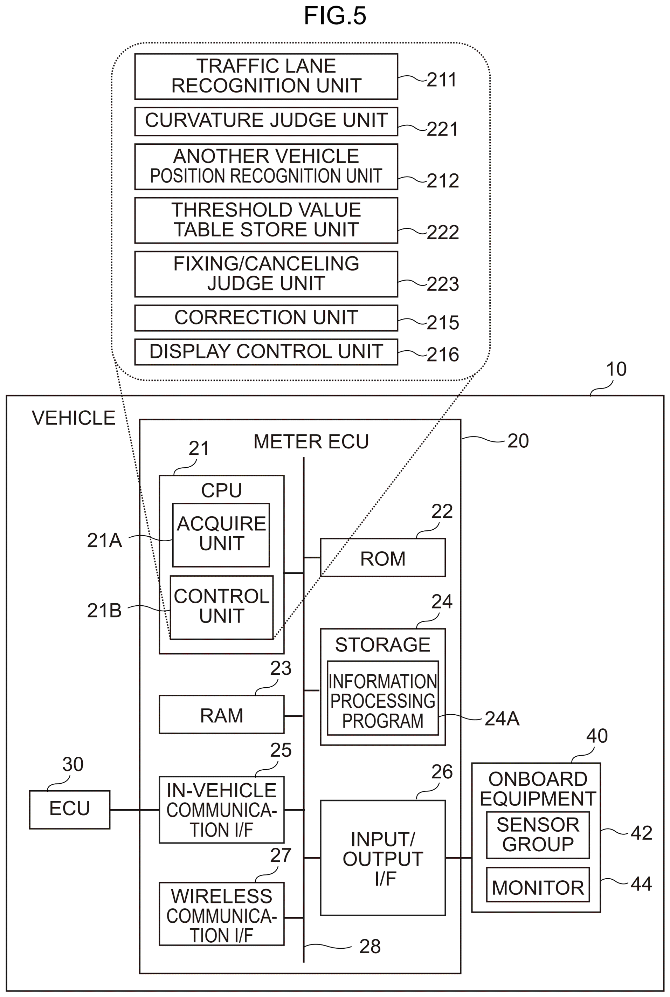

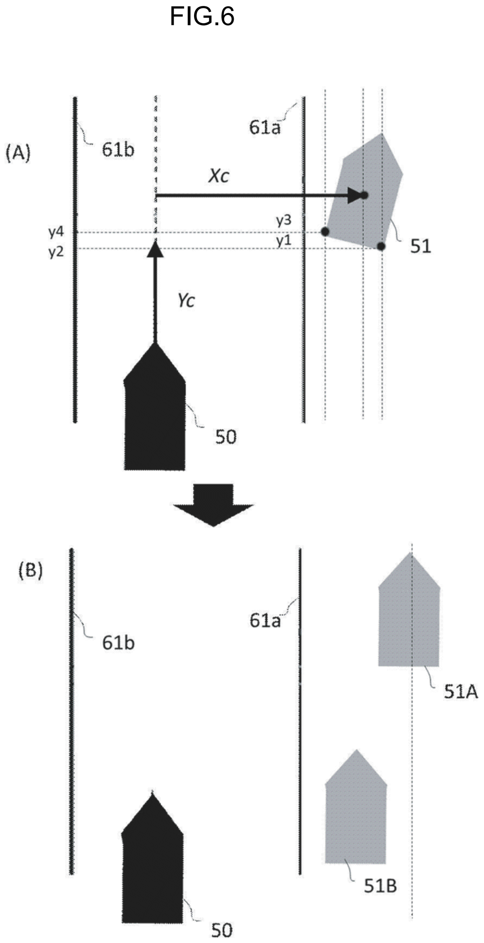

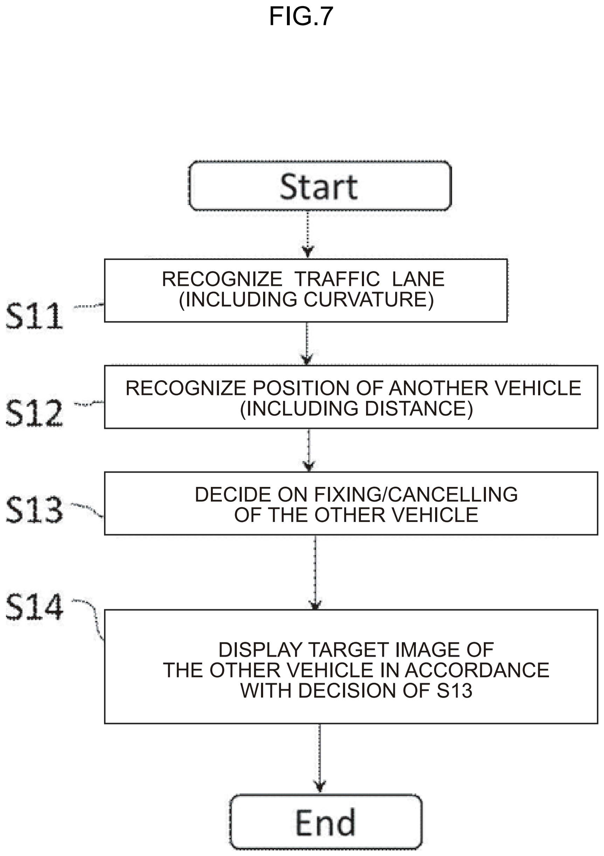

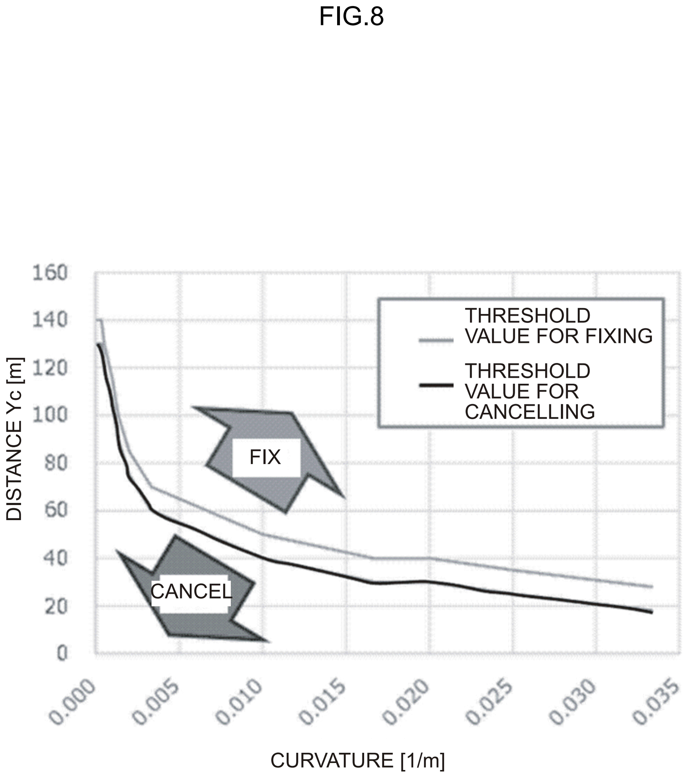

Fig. 1 is a block drawing illustrating hardware structures of a vehicle 10 that includes a display control device relating to a first embodiment; Fig. 2 is a schematic drawing for explaining methods of judging degree of reliability at a reliability degree setting unit 213 of the first embodiment; Fig. 3 is a schematic drawing illustrating an example of a case in which a target image is displayed on a monitor 44 in accordance with results of judgement of the degree of reliability in the first embodiment; Fig. 4 is a flowchart explaining operation of the first embodiment; Fig. 5 is a block drawing illustrating hardware structures of the vehicle 10 that includes a display control device relating to a second embodiment; Fig. 6 is a schematic drawing illustrating an example of a case in which a target image is displayed on the monitor 44 in the second embodiment; Fig. 7 is a flowchart explaining operation of the second embodiment; and Fig. 8 is a schematic drawing (a graph) for explaining a method of judging whether to set the display of a target image of another vehicle in the center of a lane or at an actual position in the second embodiment.

Detailed Description

One or plural embodiments will be described hereinafter with reference to the appended drawings. The appended drawings illustrate embodiments that are in accordance with the principles of the present disclosure, but are for comprehension of the present disclosure and are not in any way to be used to interpret the present disclosure limitatively. The descriptions of the present specification are merely typical examples, and do not in any way limit the claims or applied examples of the present disclosure. The respective drawings are all schematic, and the relationships of the dimensions of the respective elements, the ratios of the respective elements and the like that are illustrated in the drawings do not necessarily coincide with the actual ones. Further, the relationships of the dimensions of the respective elements, the ratios of the respective elements and the like also do not necessarily coincide with one another among the respective, plural drawings.

Description of the embodiments is given in sufficient detail for those skilled in the art to implement the present disclosure, and it is to be understood that changes to the constructions and structures, and substitutions of various elements, are possible without departing from the scope and the spirit of the technical concept of the present disclosure. Accordingly, the following descriptions are not be interpreted as being limiting to such.

### [First Embodiment]

A vehicle 10 that includes a display control device relating to a first embodiment is described with reference to Fig. 1. Fig. 1 is a block drawing illustrating hardware structures of the vehicle 10.

As illustrated in Fig. 1, the vehicle 10 has a meter ECU (Electronic Control Unit) 20. The vehicle 10 is an example of the "vehicle" in the present disclosure, and the meter ECU 20 is an example of the "vehicle display control device" in the present disclosure.

The meter ECU 20 is structured to include a CPU (Central Processing Unit) 21, a ROM (Read Only Memory) 22, a RAM (Random Access Memory) 23, a storage 24, an in-vehicle communication I/F (InterFace) 25, an input/output I/F 26 and a wireless communication I/F 27. These respective structural elements are connected to as to be able to communicate with one another via an internal bus 28.

The CPU 21 is a central computing processing unit, and executes various programs and controls respective sections. Namely, the CPU 21 reads-out programs from the ROM 22 or the storage 24, and executes the programs by using the RAM 23 as a workspace. The CPU 21 carries out control of the above-described respective structures, and various computing processings, in accordance with programs that are recorded in the ROM 22 or the storage 24.

The ROM 22 stores various programs and various data. The RAM 23 temporarily stores programs and data as a workspace. The storage 24 is structured by a storage medium such as an eMMC (embedded Multi Media Card) or a UFS (Universal Flash Storage), and stores various programs and various data. An information processing program 24A is stored in the storage 24. The information processing program 24A is a program for causing the CPU 21 to execute a specific processing described hereinafter.

The in-vehicle communication I/F 25 is an interface for connection with another ECU 30, and communication standards based on CAN (Controller Area Network) protocol are used thereat. The in-vehicle communication I/F 25 is connected to an external bus 29. Note that, although not illustrated, the ECU is not limited to the ECU 30, and plural ECUs are provided in accordance with the various functions at the vehicle 10. The input/output I/F 26 is an interface for communicating with onboard equipment 40 installed in the vehicle 10.

The onboard equipment 40 are various equipment that are installed in the vehicle 10. The vehicle 10 has, as examples of the onboard equipment 40, a sensor group 42 (sensor portions) and a monitor 44. The sensor group 42 is structured to include various types of sensors and imaging means for sensing the state of the vehicle 10 and the situation in the surroundings of the vehicle 10. Specifically, the sensor group 42 includes, for example, various sensors such as 3D-LiDAR sensors, millimeter wave sensors, infrared sensors, turn signal sensors, an accelerator position sensor, a vehicle speed sensor, an actual steering angle sensor, an angular speed sensor, a GPS (Global Positioning System) sensor, an illumination sensor, a gyro sensor, a steering wheel angle sensor, and an acceleration sensor, and plural cameras that capture images of the periphery of the vehicle 10. The sensor group 42 outputs the results of sensing of the respective sensors and the images captured by the respective cameras to predetermined electronic control units such as the meter ECU 20 and the ECU 30.

The monitor 44 is provided at the meter panel that is disposed in front of the driver's seat of the vehicle 10, and is a meter display for displaying suggestions of operations relating to functions of the vehicle 10, images relating to descriptions of these functions, and the like. The monitor 44 is an example of the "display portion" in the present disclosure.

The wireless communication I/F 27 is a wireless communication module for communicating with external equipment. Communication standards such as, for example, 5G, LTE, Wi-Fi^{™} and Bluetooth^{™} are used at this wireless communication module.

Further, the CPU 21 of the meter ECU 20 has an acquire unit 21A and a control unit 21B as functional structures thereof. These respective functional structures are realized due to the CPU 21 reading-out and executing the information processing program 24A that is stored in the storage 24. The acquire unit 21A acquires various types of information that can be acquired at the vehicle 10. Specifically, the acquire unit 21A acquires sensed information such as the results of sensing of the respective sensors structuring the sensor group 42 and the images captured by the respective cameras.

The control unit 21B carries out display control relating to display on the monitor 44. For example, as this display control, based on the sensed information acquired by the acquire unit 21A, the control unit 21B causes the monitor 44 to display a peripheral situation image that shows the peripheral situation (the traffic lane and the like) of the vehicle 10 viewed from a virtual viewpoint, a vehicle image representing the vehicle 10, and target images that represent recognized target (another vehicle and the like). Display of the target images is carried out in forms of display corresponding to the categories of the recognized target (e.g., as icons expressing the categories). Here, "virtual viewpoint" is a viewpoint that is set in a three-dimensional virtual space and whose point of origin is the position of the vehicle icon representing the vehicle 10, and this virtual viewpoint is defined by a predetermined viewpoint coordinate and viewpoint angle (orientation) in the virtual space. As an example, the virtual viewpoint is a viewpoint in which the vehicle 10 and the periphery thereof are seen in a bird's-eye view at a specific viewpoint angle from a specific viewpoint coordinate positioned above the vehicle icon in the virtual space. The control unit 21B is an example of the "control unit" in the present disclosure.

Specifically, as an example, the control unit 21B can include a traffic lane recognition unit 211, another vehicle position recognition unit 212, a reliability degree setting unit 213, a reliability degree judge unit 214, a correction unit 215, and a display control unit 216.

The traffic lane recognition unit 211 recognizes the traffic lane that exist on the surface of the road on which the host vehicle and the other vehicle travel, and that prescribes the traveling lanes.

In accordance with detection signals obtained from the sensor group 42, the another vehicle position recognition unit 212 recognizes the relative position, with respect to the host vehicle, of other vehicle that is in the surroundings of the host vehicle, and the relative position of the other vehicle with respect to the traffic lane (the distance in the vertical direction from the host vehicle, the distance in the horizontal direction from the traffic lane and/or the host vehicle, or the like). The another vehicle position recognition unit 212 recognizes the relative position of the other vehicle with respect to the traffic lane by applying any of various techniques. As examples, the another vehicle position recognition unit 212 carries out recognition of the position of other vehicle with respect to the traffic lane by a horizontal position edge method that carries out edge detection along a direction extending from the other vehicle in the direction of a traffic lane, a vicinity approximation curve method that recognizes the position of other vehicle with respect to the traffic lane by generating an approximation curve by using a set of data points detected in a local region in the surroundings of the other vehicle, an overall approximation curve method that recognizes the position of other vehicle with respect to the traffic lane by generating an approximation curve by using an entire set of detected data points, and a border extrapolating method that recognizes the position of other vehicle with respect to the traffic lane by adding extrapolated data to border lines obtained from detected data. The above-described, various methods are merely examples, and methods other than these can be applied, and these methods may be substituted by other methods that are not exemplified. Further, it goes without saying that the recognizing of other vehicle with respect to the lane lanes may be carried out by combining plural methods. Which method(s) to use can be selected in accordance with, for example, the amount of or the dispersed state of the obtained data.

The reliability degree setting unit 213 sets a degree of reliability of the recognition at the another vehicle position recognition unit 212 of the relative position of the other vehicle with respect to the traffic lane. Here, the degree of reliability refers to an index indicating the extent to which the recognition of the position of the other vehicle with respect to the recognized traffic lane, may differ from the actual position of the other vehicle. As examples, the reliability degree setting unit 213 can set the degree of reliability for the recognition of the position of other vehicle in accordance with the method applied by the another vehicle position recognition unit 212 for recognizing the relative position of the other vehicle with respect to the traffic lane, or the results of recognizing the positions of the traffic lane and the other vehicle.

Fig. 2 illustrates examples of relationships between degrees of reliability and the methods that are applied in order to recognize the relative position of other vehicle with respect to the traffic lane by the another vehicle position recognition unit 212, in a case in which another condition (e.g., the horizontal distance or the vertical distance between the host vehicle and the other vehicle, or the curvature of the traffic lane) is met. As an example, in a case in which the horizontal position edge method is used in order to recognize the relative position of other vehicle with respect to the traffic lane, "reliability degree 1" that is the highest degree of reliability is set. In a case in which the vicinity approximation curve method is used in order to recognize the position of other vehicle with respect to the traffic lane, and further, the density of the data is high (is dense), "reliability degree 2" which is the next highest after "reliability degree 1" is given. In a case in which the vicinity approximation curve is used but the density of the data is low (sparse), "reliability degree 3" that is lower than "reliability degree 2" is given. In the example of Fig. 2, "reliability degree 9" is the lowest degree of reliability, and moreover, "reliability degree 0" is given in cases in which the recognizing by the traffic lane recognition unit 211 is invalid.

The degree of reliability that is awarded can be changed when the method that is used in order to recognize the relative position of other vehicle changes. Further, the degree of reliability can change if the method used in order to recognize the relative position of other vehicle is the same but another condition changes. As an example, the degree of reliability that is set can be changed in a case in which it is recognized that the relative position of the other vehicle with respect to the traffic lane has changed. Further, for example, different degrees of reliability can be used in a case in which the recognized traffic lane are ahead of the other vehicle and in a case in which the recognized traffic lane are behind that other vehicle. In the former case, the positional relationship between the traffic lane and the other vehicle can be understood more clearly, and therefore, a higher degree of reliability can be set than in the latter case.

The reliability degree judge unit 214 judges the degree of reliability of the results of recognizing the position of other vehicle by the another vehicle position recognition unit 212, in accordance with the method that is used in judging the relative position of the other vehicle by the another vehicle position recognition unit 212, the distance (horizontal direction and/or vertical direction) of the other vehicle from the host vehicle, data of the peripheral situation of the other vehicle, or the like. The correction unit 215 corrects the position and the inclination at which the other vehicle is displayed in accordance with the degree of reliability judged at the reliability degree judge unit 214. The display control unit 216 controls the display of the target image of the other vehicle on the monitor 44 (display portion), and in addition thereto, the images of the peripheral situation and the like, in forms that reflect the results of correction at the correction unit 215. Note that the judgement on the degree of reliability by the reliability degree judge unit 214 can be executed in a case in which the distance of the other vehicle, which is the target of the judgement, from the host vehicle is a predetermined value or more (e.g., 100 m or more). If the distance is less than the predetermined value, the degree of reliability may be fixed at "reliability degree 1" that is the highest level.

The process of control of display of other vehicle image (a target image) by the control unit 21B is described with reference to Fig. 3 and Fig. 4. Fig. 3 is a display example of the display screen on the monitor 44, and Fig. 4 is a flowchart for explaining the processes of the various judgments relating to display and the display control.

An overview of the control of display of other vehicle image 51A, 51B that represents other vehicle is described with reference to Fig. 3. In the display example of Fig. 3, a host vehicle image 50 representing the host vehicle, the other vehicle image 51A or 51B, and traffic lane images 61a - 61d showing the traffic lane are displayed on the monitor 44.

The traffic lane images 61a - 61d are displayed in accordance with the results of recognition by the traffic lane recognition unit 211. In a case in which the traffic lane are curved, the traffic lane images 61a - 61d are drawn in accordance with the magnitude (the curvature or the like) of the recognized curve.

In a case in which the traffic lane images 61a - 61d are drawn, the degree of reliability relating to the recognition by the another vehicle position recognition unit 212 of the position of other vehicle with respect to the traffic lane images 61a - 61d also is judged at the reliability degree setting unit 213 and the reliability degree judge unit 214. Then, the display position and inclination of the other vehicle image 51A or 51B with respect to the traffic lane images 61a - 61d are controlled based on the judged degree of reliability. If the degree of reliability is low (e.g., a case of "reliability degree 9"), as shown in Fig. 3(A) for example, even if the other vehicle relating to the other vehicle image 51A is judged by the another vehicle position recognition unit 212 to be traveling while straddling a traffic lane, in consideration of the low level of the degree of reliability, the other vehicle image 51A is displayed on the monitor 44 (see Fig 3(B)) so as to be at the position of the center of the traveling lane that is between the traffic lane and the traffic lane, and so as to be inclined along the direction of the traveling lane. Namely, the correction unit 215 carries out correction on the results of recognition by the another vehicle position recognition unit 212 in accordance with the results of judgment by the reliability degree judge unit 214, and as a result, the corresponding other vehicle image 51A is displayed after being corrected such that it is at the position of the center of the traveling lane and is inclined along the direction of the traveling lane. This is because, in a case in which the degree of reliability is low, displaying the other vehicle image at the position of the center of the lane is preferable from the standpoint of reducing confusion of the driver.

On the other hand, if the degree of reliability is high (e.g., a case of "reliability degree 2"), the other vehicle image 51B relating to the other vehicle that is traveling in the traveling lane relating to those traffic lane is displayed relative to the traffic lane images 61a - 61d in accordance with the results of recognition (the position, the inclination) by the other vehicle position recognition unit 212 (i.e., without being corrected).

The specific processes of control of the display of the other vehicle image 51A, 51B that represents other vehicle are described with reference to the flowchart of Fig. 4. When traffic lane are recognized by the traffic lane recognition unit 211 (step S1), and the position of other vehicle with respect to the traffic lane of the other vehicle and with respect to the host vehicle is recognized by the another vehicle position recognition unit 212 (step S2), the degree of reliability of the recognition of the other vehicle position in step S2 is judged (step S3) by the reliability degree judge unit 214 with reference to the reliability degree setting unit 213 and on the basis of the type of the recognition method that was used, the distance from the host vehicle to the other vehicle, and the like.

Thereafter, if the other vehicle for which the degree of reliability was judged is judged to be within the corresponding traveling lane (Yes in step S4), other vehicle image relating to that other vehicle is displayed at the position corresponding to the degree of reliability that was set in step S3. Note that, while it is being judged for the time being that the other vehicle is continuing to travel in the traveling lane prescribed by the recognized traffic lane, the degree of reliability once judged in step S3 is fixed as is and is not changed (step S5). Due thereto, the display position of the other vehicle image being changed frequently is suppressed, and a degree of incongruity being given to the driver is prevented. In a case in which it is judged that the other vehicle has departed from the traveling lane (the target lane) prescribed by the recognized traffic lane (Yes in step S6), the display control process ends, and the same operations are repeated thereafter.

As described above, in accordance with the vehicle display control device of the present embodiment, in a case in which the position of other vehicle with respect to traffic lane is recognized, the degree of reliability of that recognition is judged, and if the degree of reliability is low, the other vehicle image that represents the other vehicle is corrected so as to be in the center of the recognized traveling lane and in the direction along the traffic lane (i.e., without being tilted), and is displayed on the monitor 44. In a case in which recognition of other vehicle with respect to the traffic lane cannot be made accurately, or a case in which the other vehicle is far from the host vehicle, even if display of an another vehicle image that is in accordance with the detection signals of the sensor group 42 is carried out, not only can accurate information not be given to the driver, but conversely, the driver will be confused. If the degree of reliability is low, by carrying out display of the other vehicle image that has been corrected as described above, the confusion imparted to the driver can be lessened.

### [Second Embodiment]

The vehicle 10 that includes a display control device relating to a second embodiment is described next with reference to Fig. 5. Fig. 5 is a block drawing illustrating hardware structures of the vehicle 10. Structural elements that are the same as those of the first embodiment (Fig. 1) are denoted by the same reference numerals in Fig. 5 as well, and therefore, redundant description is omitted. The form of the second embodiment differs from the form of the first embodiment with regard to the point that the control unit 21B has a curvature judge unit 221, a threshold value table store unit 222 and a fixing/canceling judge unit 223, instead of (or in addition to) the reliability degree setting unit 213 and the reliability degree judge unit 214.

The curvature judge unit 221 judges the curvature of the traffic lane recognized by the traffic lane recognition unit 211. The threshold value table store unit 222 is a store unit that stores, as a table and in the relationship of the curvature of the traffic lane and the distance of a traffic lane from the host vehicle, threshold values for switching between whether to fix the display position of other vehicle image representing the other vehicle in the center of the traveling lane, or to display the other vehicle image at the position judged by the another vehicle position recognition unit 212 (i.e., to cancel the fixing), regardless of the position of the other vehicle that was judged by the another vehicle position recognition unit 212. Details are described later. From the threshold value, it is possible to judge whether or not the results of recognition by the another vehicle position recognition unit 212 can be trusted. From this perspective, the threshold value table store unit 222 is a form of the reliability degree setting unit 213 of the first embodiment.

On the basis of whether or not the distance of the other vehicle from the host vehicle, in the combination of the relationship between the obtained curvature of the traffic lane and the distance of the other vehicle from the host vehicle, is greater than or equal to the threshold value prescribed in the threshold value table store unit 222, the fixing/canceling judge unit 223 judges whether to display the other vehicle that is the target of detection fixedly with respect to the traffic lane, or whether to display the other vehicle as per the recognition by the another vehicle position recognition unit 212 (i.e., to cancel fixing). If the fixing/canceling judge unit 223 judges that display is to be fixed, the correction unit 215 corrects the results of recognition by the another vehicle position recognition unit 212 such that the other vehicle image of this other vehicle will be displayed in the center of the traveling lane. In accordance with the another vehicle position recognition unit 212 and the results of correction at the correction unit 215, the display control unit 216 carries out control of the display of the other vehicle image and the display of other images on the monitor 44.

An overview of the control of display of the other vehicle images 51A, 51B that represent other vehicle is described with reference to Fig. 6. In Fig. 6, 6(A) illustrates a technique of measuring horizontal distance Xc and vertical distance Yc of the other vehicle (corresponding to the other vehicle image 51 (51A, 51B)) from the host vehicle (corresponding to the host vehicle image 50), and Fig. 6(B) explains control that switches the display position of the other vehicle image 51A, 51B in accordance with the curvature of the traffic lane and the measured distances. In the display example of Fig. 6(B), the host vehicle image 50 that represents the host vehicle, the other vehicle image 51 (51A, 51B), and the traffic lane images 61a, 61b showing the traffic lane are displayed on the monitor 44.

The traffic lane images 61a, 61b are displayed in accordance with the results of recognition by the traffic lane recognition unit 211. If the traffic lane are curved, the traffic lane images 61a, 61b are drawn in accordance with the magnitude (the radius of curvature or the like) of the recognized curve.

The curvature of the traffic lane is judged at the curvature judge unit 221, and further, the horizontal distance Xc and the vertical distance Yc of the other vehicle from the host vehicle are judged by the another vehicle position recognition unit 212. The horizontal distance Xc can, for example, be measured as the length of the perpendicular line that is drawn toward the center of gravity of the other vehicle from a line segment that runs along the longitudinal direction of the host vehicle. Further, the vertical distance Yc can be measured as the average value (or intermediate value) of the distances between the position of the distal end of the host vehicle and positions y1, y2, y3, y4 of intersecting points of lines drawn perpendicular to the traffic lane 61a, 61b from the left rear end and the right rear end of the other vehicle.

When the curvature of the traffic lane 61a, 61b are measured, and further, the vertical distance Yc to the other vehicle is measured, in accordance with the relationship between the curvature and the vertical distance Yc, the fixing/canceling judge unit 223 judges whether to fix the display position of the other vehicle image that represents the other vehicle in the center of the traveling lane prescribed by the traffic lane 61a, 61b, or whether to set the display position of the other vehicle image as per the results of recognition by the another vehicle position recognition unit 212 (i.e., to cancel fixing). If the other vehicle image is to be fixed, the correction unit 215 corrects the results of recognition by the another vehicle position recognition unit 212 such that the other vehicle image will be positioned in the center of the traveling lane. If fixing is to be cancelled, the other vehicle image is displayed as per the results of recognition by the another vehicle position recognition unit 212 (i.e., without being corrected).

The specific processes of control of the display of the other vehicle image 51 that represents other vehicle are described with reference to the flowchart of Fig. 7. When the traffic lane are recognized by the traffic lane recognition unit 211, and further, the curvature of the traffic lane is judged by the curvature judge unit 221 (step S11), and the relative position (including the distance) of the other vehicle with respect to the traffic lane and the host vehicle is recognized by the another vehicle position recognition unit 212 (step S12), the fixing/canceling judge unit 223 judges (step S13), on the basis of the judgment of the curvature in step S11 and the vertical distance Yc and in accordance with the results of comparison of this vertical distance Yc and the threshold value, whether the other vehicle image of this other vehicle is to be displayed fixedly with respect to the center of the traveling lane, or whether the other vehicle image is to be displayed at a position that is in accordance with the results of recognition by the other vehicle position recognition unit 212 (i.e., to cancel fixing). Thereafter, display of the other vehicle image representing the other vehicle is carried out (step S14) in accordance with the determination in step S13.

Fig. 8 is a graph illustrating an example of the threshold value data stored in the threshold value table store unit 222. The threshold value table store unit 222 exemplified in Fig. 8 stores two threshold values that are a threshold value for fixing and a threshold value for cancelling, as the threshold values. The threshold value for fixing is a threshold value for, in a case in which a fixing cancelled state, in which the other vehicle image representing the other vehicle is displayed as per the results of recognition by the another vehicle position recognition unit 212, has been obtained, judging whether or not to switch from the fixing cancelled state to a fixed state. On the other hand, the threshold value for cancelling is a threshold value for judging, in a case in which a fixed state, in which the other vehicle image representing the other vehicle is fixed at the center of the traveling lane prescribed by the traffic lane regardless of the results of recognition by the another vehicle position recognition unit 212, has been obtained, judging whether or not to switch from the fixed state to the fixing cancelled state.

For example, in a case in which the threshold value table store unit 222 such as that of Fig. 8 is set, if the curvature of the traffic lane is 0.020 [1/m] and the vertical distance Yc of the other vehicle exceeds 40 m, the fixing/canceling judge unit 223 sets a state in which the other vehicle image of the other vehicle is displayed fixedly in the center of the traveling lane. However, if that other vehicle approaches the host vehicle and the vertical distance Yc becomes, for example, less than 30 m and less than the threshold value for cancelling, that fixed state is cancelled and a fixing cancelled state is obtained, and the other vehicle image representing the other vehicle is displayed at a position that is in accordance with the results of recognition by the another vehicle position recognition unit 212.

Conversely, in a case in which the threshold value table store unit 222 such as that of Fig. 8 is set, if the curvature of the traffic lane is 0.020 [1/m] and the vertical distance Yc of the other vehicle is less than 30 m, the fixing/canceling judge unit 223 sets a state in which the other vehicle image of the other vehicle is displayed fixedly in the center of the traveling lane. However, if that other vehicle moves further away from the host vehicle and the vertical distance Yc, for example, exceeds 40 m and exceeds the threshold value for fixing, that fixing cancelled state is cancelled and a fixed state is obtained, and the other vehicle image representing the other vehicle is displayed fixedly in the center of the traveling lane regardless of the results of recognition by the another vehicle position recognition unit 212.

As illustrated in Fig. 8, in the present embodiment, two threshold values that are the threshold value for fixing and the threshold value for cancelling are provided. If the vertical distance Yc exceeds the threshold value for fixing, correction by the correction unit 215 is started. If the relative distance Yc is less than the threshold value for cancelling, correction by the correction unit 215 is stopped. If the relative distance Yc is greater than or equal to the threshold value for cancelling and less than or equal to the threshold value for fixing, operation of the correction unit 215 (the fixed state, the fixing cancelled state) is maintained without being changed. Due thereto, the other vehicle image that represents the other vehicle is prevented from being switched frequently between the fixed state and the fixing cancelled state, and the confusion that is imparted to the driver can thereby be reduced. Note that the difference between the threshold value for fixing and the threshold value for cancelling can be set to be around 10 m for example. The difference between the threshold value for fixing and the threshold value for cancelling can be made to be constant regardless of the curvature of the traffic lane, or may be varied in accordance with the curvature.

As described above, in accordance with the vehicle display control device of the present embodiment, in a case in which recognition of the traffic lane and recognition of the position of other vehicle are carried out, the other vehicle image that represents that other vehicle is, on the basis of the curvature of the traffic lane and the vertical distance from the host vehicle to the other vehicle, appropriately switched between a fixed state of being fixedly displayed in the center of the traveling lane prescribed by the traffic lane, and a fixing cancelled state of being displayed as per the results of recognition of the position. Due thereto, the display position of the image of the other vehicle being changed frequently, and confusion being imparted to the driver, are suppressed. Display of the other vehicle image can be further optimized by setting different threshold values (the threshold value for fixing, the threshold value for cancelling) as the threshold values for switching between the fixed state and the fixing cancelled state.

### [Other Points]

The control unit and methods thereof that are described in the present disclosure may be realized by a dedicated computer that structures a processor that is programmed so as to execute one or plural functions that are specified by a computer program. Or, the device and methods thereof that are described in the present disclosure may be realized by a dedicated computer that structures a processor by a dedicated hardware logic circuit. Or, the device and methods thereof that are described in the present disclosure may be realized by one or more dedicated computers that are structured by a combination of a processor that executes a computer program and one or more hardware logic circuits. Further, the computer program may be stored on a non-transitory, tangible, computer-readable recording medium as instructions to be executed by a computer.

The present disclosure is not to be limited to the above-described embodiments, and includes various modified examples. For example, the above embodiments are described in detail in order to describe the present disclosure in an easily understandable manner, but are not necessarily limited to having all of the described structures. Further, some of the structures of an embodiment may be substituted with structures of another embodiment. Moreover, structures of an embodiment can be added to structures of another embodiment. In addition, other structures can be added to, deleted from, or replace some of the structures of the respective embodiments.

## Claims

1. A vehicle display control device (20), comprising:
a recognition unit (211, 212) configured to recognize a traffic lane in the surroundings of a host vehicle, and a relative position of another vehicle with respect to the traffic lane; and
a control unit (21B) configured to cause a display portion (44) to display a target image of the other vehicle at a display position and an inclination of the target image of the other vehicle with respect to the traffic lane, the display position and the inclination having been corrected based on a degree of reliability of recognition of the relative position of the other vehicle.

2. The vehicle display control device (20) of claim 1, further comprising:
a setting unit (213) configured to set the degree of reliability of recognition of the relative position of the other vehicle; and
a correction unit (215) configured to correct the display position and the inclination based on the degree of reliability,
wherein the setting unit (213) is configured to set the degree of reliability based on results of recognition by the recognition unit (211, 212).

3. The vehicle display control device (20) of claim 2, wherein the setting unit (213) is configured to change the degree of reliability in accordance with whether the traffic lane, which is a target of recognition by the recognizing unit (211, 212), is in front of the other vehicle or is behind the other vehicle.

4. The vehicle display control device (20) of claim 2 or claim 3, wherein the setting unit (213) is configured to lock the degree of reliability while the other vehicle is traveling in the traffic lane that is a target of recognition by the recognition unit (211, 212).

5. The vehicle display control device (20) of any of claims 2 to 4, wherein the correction unit (215) is configured to correct the display position and the inclination of the target image of the other vehicle in accordance with a curvature of the traffic lane and a relative distance of the other vehicle with respect to the host vehicle.

6. A vehicle display control program, executable by at least one processor to perform processing comprising:
recognizing a traffic lane in the surroundings of a host vehicle, and a relative position of another vehicle with respect to the traffic lane; and
causing a display portion (44) to display a target image of the other vehicle at a display position and an inclination of the target image of the other vehicle with respect to the traffic lane, the display position and inclination having been corrected based on a degree of reliability of recognition of the relative position of the other vehicle.
